(19) Europäisches Patentamt
European Patent Office
Office européen des brevets

(11) Veröffentlichungsnummer: **0 019 881**
**B1**

# (12) EUROPÄISCHE PATENTSCHRIFT

(45) Veröffentlichungstag der Patentschrift:
26.05.82

(21) Anmeldenummer: 80102893.7

(22) Anmeldetag: 23.05.80

(51) Int. Cl.³: **C 07 C 126/10**, C 05 C 9/00,
C 05 C 13/00

(54) Harnstoffkörner mit verbesserten Eigenschaften und Verfahren zu Ihrer Herstellung.

(30) Priorität: 01.06.79 DE 2922436

(43) Veröffentlichungstag der Anmeldung:
10.12.80 Patentblatt 80/25

(45) Bekanntmachung des Hinweises auf die Patenterteilung:
26.05.82 Patentblatt 82/21

(84) Benannte Vertragsstaaten:
AT BE FR GB IT NL

(56) Entgegenhaltungen:
AT-B-254206
DE-A1-2702284
DE-A1-2714601

(73) Patentinhaber: SKW Trostberg Aktiengesellschaft,
Dr.-Albert-Frank-Strasse 32 Postfach 1150/1160,
D-8223 Trostberg (DE)

(72) Erfinder: Keim, Karlheinz, Dieselstrasse 43,
D-5047 Wesseling (DE)
Erfinder: Meisenburg, Ewald, Höhenring 60,
D-5351 Heimerzheim (DE)
Erfinder: Röck, Heinrich, Dr., Traunsteiner Strasse 9,
D-8223 Trostberg (DE)

(74) Vertreter: Weickmann, Heinrich, Dipl.-Ing. et al,
Postfach 860 820 Möhlstrasse 22,
D-8000 München 86 (DE)

Harnstoffkörner mit verbesserten Eigenschaften und Verfahren zu ihrer Herstellung

Die Erfindung betrifft Harnstoffkörner mit verbesserten Eigenschaften und ein Verfahren zu ihrer Gewinnung aus einer konzentrierten Harnstofflösung oder einer Harnstoffschmelze durch Zusatz von 0,1 bis 3,5 Gew.% Dicyandiamid zum Harnstoff vor dessen Überführung in Körner.

Harnstoff wird als solcher oder im Gemisch mit anderen stickstoffhaltigen Verbindungen, z.B. Diammoniumphosphat oder Dicyandiamid bzw. dessen Salzen (DE-PS 1 592 768, DE-OS 2 531 962) in grossem Massstab als Düngemittel verwendet. Der Harnstoff besitzt jedoch den Nachteil, dass die aus ihm hergestellten Körner, z.B. Prills, wegen ihrer relativ geringen Härte und dem hierdurch bedingten Abrieb beim Transport und Verladen schlechte Lagerfähigkeit besitzen und vor allem in feuchter Atmosphäre zum Zusammenbacken neigen.

Zur Verbesserung der Lagerfähigkeit sind zahlreiche Vorschläge gemacht worden. So werden neben Zusätzen, die auf die Harnstoffkörner aufgebracht werden, auch solche empfohlen, die zu Harnstoffschmelzen oder wässrigen Harnstofflösungen zugefügt werden.

Verfahren zur Verbesserung der Harnstoffkörner durch Zusatz wässriger Formaldehydlösung (DE-OS 2 825 039) oder von wässrigen Lösungen von Harnstoff-Formaldehyd-Kondensationsprodukten (DE-OS 21 39 278) oder von wasserunlöslichen Dicyandiamid-Formaldehyd-Kondensationsprodukten (AT-PS 254 206) sind bereits bekannt und zielen im wesentlichen auf eine Verhinderung des Zusammenbackens der Harnstoffkörner ab. Es hat sich gezeigt, dass die sich hierdurch ergebende Verbesserung der Kornhärte nur geringfügig ist. Darüber hinaus sind Verfahren unter Verwendung von Formaldehyd unbefriedigend; denn die in Formaldehydlösungen immer vorhandenen geringen Mengen an Methanol reichern sich im Harnstoffprozess an, so dass bereits nach relativ kurzer Zeit der Betrieb zum Erliegen kommt. Ferner ist der Zusatz von wässrigen Lösungen allgemein als ungünstig anzusehen, da zur Erzeugung von Harnstoffkörnern Wasser vollständig entfernt werden muss. Hierdurch sind auch die weiterhin vorgeschlagenen Zusätze, wie Polyvinylalkohol, gelöst in Wasser (DE-OS 1 916 089), oder von wässrigen Leim-, Stärke- und Celluloselösungen (DE-PS 949 238, DE-PS 530 499) als unvorteilhaft anzusehen. In der DE-OS 2 714 601 wird zwar der Zusatz von 5-30 Gew.% Dicyandiamid zu Harnstoff empfohlen, um geruchsfreie Harnstoff-Dicyandiamid-Dünger zu erhalten; hieraus war jedoch kein Hinweis auf eine Verbesserung der Kroneigenschaften des Harnstoffs zu entnehmen.

Es wurde nun überraschend gefunden, dass Harnstoffkörner mit verbesserten Eigenschaften gewonnen werden können, wenn man 0,1 bis 3,5 Gew.% Dicyandiamid zur Harnstoffschmelze oder zu einer konzentrierten Harnstofflösung zusetzt. Bereits durch die angegebenen relativ geringen Mengen an Dicyandiamid wird eine starke Zunahme der Härte der aus einer solchen Schmelze oder Lösung gewonnenen Harnstoffkörner erzielt.

Hiermit wird auch der Abrieb bei Transport- und Lagervorgängen wesentlich verringert.

Während beim Zerbrechen der reinen Harnstoffkörner ein Zerfall in zahlreiche kleine Bruchstücke erfolgt, die die Hygroskopie des Harnstoffs und damit die Gefahr des Zusammenbackens erhöhen, tritt bei den gemäss der Erfindung erhaltenen Harnstoffkörnern, die z.B. bei Transportvorgängen zerbrechen, ein Bruch in nur wenige grosse Bruchstücke auf. Die Harnstoffkörner bleiben daher auch bei längerer Lagerung frei fliessend.

Es genügen im allgemeinen Zusätze von 0,1 bis 1,5 Gew.%, um eine erhebliche Erhöhung der Festigkeit der Harnstoffkörner zu erzielen. Zusätze von mehr als 3,5 Gew.% Dicyandiamid sind selbstverständlich möglich, führen aber zu keiner wesentlichen weiteren Zunahme der Harnstoffkornhärte. Dicyandiamid hat darüber hinaus den Vorteil, dass es eine pflanzenfreundliche Substanz ist, deren Stickstoffgehalt Düngewirkung besitzt.

Das Dicyandiamid kann vorteilhaft direkt zur Harnstoffschmelze zugegeben werden, wobei gleichzeitig auch andere übliche Zusätze, wie z.B. kleine Mengen an Säuren, zugeführt werden können. Man kann das Dicyandiamid, vorteilhaft, in wässriger Lösung, auch zu einer konzentrierten wässrigen Harnstofflösung zugeben, obgleich dies den Nachteil mit sich bringt, dass das Wasser wieder entfernt werden muss. Der Dicyandiamid-Zusatz ist insbesondere zur Verbesserung der Abriebfestigkeit und Bruchfestigkeit von Harnstoff-Prills geeignet.

In den folgenden Beispielen wird die Erfindung näher erläutert.

*Beispiel 1:*

Zu einer Harnstoffschmelze, wie sie üblicherweise in die Prillvorrichtung am Kopf eines Prillturms eingesetzt wird, wurden mit einer Dosiervorrichtung kontinuierlich, 0,5 Gew.% Dicyandiamid zugegeben. Aus den aus der Schmelze in üblicher Weise gewonnenen Prills wurde eine Siebfraktion von 1,6 bis 1,8 mm ausgesiebt und auf Bruchfestigkeit (Anteil Bruch bei Aufprall auf eine Wand mit einer Geschwindigkeit von 13 m/sec) und auf Druckfestigkeit (Belastbarkeit bis zum Bruch in g) untersucht.

*Ergebnis:*

| | Gew.-% Bruch | Drucklast in g |
|---|---|---|
| Harnstoff ohne Zusatz | 4,4 | 620 |
| Harnstoff mit 0,5 Gew.-% Dicyandiamid | 0,7 | 890 |

*Beispiel 2:*

Analog Beispiel 1 wurden Harnstoffprills mit einem Zusatz von 3 Gew.% Dicyandiamid hergestellt und untersucht.

*Ergebnis:*

|  | Gew.-% Bruch | Drucklast in g |
|---|---|---|
| Harnstoff ohne Zusatz | 4,3 | 605 |
| Harnstoff mit 3 Gew.-% Dicyandiamid | 0,4 | 950 |

*Beispiel 3:*

Zu einer 75% wässrigen Harnstofflösung wurde eine wässrige Lösung von Dicyandiamid kontinuierlich in einer solchen Menge zugegeben, dass der prozentuale Gewichtsanteil des Dicyandiamids 1 Gew.% betrug.

Die Harnstofflösung wurde in üblicher Weise unter Bildung von Kristallen aufgearbeitet. Diese zeigten folgende Eigenschaften:

|  | Gew.-% Bruch | Drucklast in g |
|---|---|---|
| Harnstoff ohne Zusatz | 4,0 | 580 |
| Harnstoff mit 1 Gew.-% Dicyandiamid | 0,5 | 905 |

*Beispiel 4:*

Kristalliner Harnstoff wird mit 0,2 Gew.% Dicyandiamid versetzt und gut durchmischt. Die Mischung wird in üblicher Weise durch Aufschmelzen und Abkühlen der Schmelztropfen geprillt. Diese Prills werden in folgender Weise einem Festigkeitstest unterzogen:

20 g der Prills werden in ein Fallrohr gefüllt und 10mal mit einem Gewichtsstück belastet (Fallhöhe ca. 25 cm, Gewicht 500 g). Die Probe wird dann über ein 0,2 mm Sieb abgesiebt. Die Auswaage der Fraktion <0,2 mm multipliziert mit dem Faktor 5 ergibt den prozentualen mechanischen Abrieb unter dynamischer Belastung.

Der gemessene mechanische Abrieb beträgt im genannten Beispiel 7,5%. Das entspricht einer Verbesserung der Festigkeit von 8% gegenüber reinem Harnstoff.

## Patentansprüche

1. Harnstoffkörner, gekennzeichnet durch einen Gehalt an 0,1 bis 3,5 Gew.% Dicyandiamid.

2. Verfahren zur Gewinnung von Harnstoffkörnern mit verbesserten Eigenschaften durch Überführung konzentrierter Harnstofflösungen oder Harnstoffschmelzen in gekörnten Harnstoff, dadurch gekennzeichnet, dass man der Harnstofflösung bzw. der Harnstoffschmelze, vor der Überführung des Harnstoffs in Körner, 0,1 bis 3,5 Gew.% Dicyandiamid zusetzt.

3. Verfahren nach Anspruch 1, dadurch gekennzeichnet, dass man die Harnstoffschmelze, die 0,1 bis 3,5% Dicyandiamid enthält, prilliert.

## Claims

1. Urea particles, characterised by a content of 0,1 to 3,5 wt.% of dicyandiamide.

2. Process for obtaining urea particles with improved properties by converting concentrated urea solutions or urea melts into particulate urea, characterised in that one adds 0,1 to 3,5 wt.% dicyandiamide to the urea solution or urea melt before the conversion of the urea into particles.

3. Process according to claim 1, characterised in that one prills the urea melt which contains 0,1 to 3,5% dicyandiamide.

## Revendications

1. Particules d'urée caractérisées en ce qu'elles contiennent de 0,1 à 3,5% en poids de dicyanodiamide.

2. Procédé pour préparer des particules d'urée possédant des propriétés améliorées par transformation de solutions concentrées d'urée ou de masses fondues d'urée en urée sous forme de particules, caractérisé en ce que, avant de mettre l'urée sous forme de particules, on ajoute à la solution d'urée ou à la masse fondue d'urée de 0,1 à 3,5% en poids de dicyanodiamide.

3. Procédé selon la revendication 1, caractérisé en ce que l'on transforme la masse fondue d'urée contenant de 0,1 à 3,5% de dicyanodiamide en grains ou prills par atomisation.